# EUROPÄISCHE PATENTSCHRIFT

(11) **EP 3 804 484 B1**
(45) Veröffentlichungstag und Bekanntmachung des Hinweises auf die Patenterteilung: **21.08.2024**
(21) Anmeldenummer: 19000456.4
(22) Anmeldetag: 08.10.2019
(51) Int. Cl.: A01B 39/08, A01D 34/74, A01G 17/02, A01D 34/416, A01B 51/00, A01D 34/86, A01D 34/66, A01B 49/00, A01B 63/02, A01B 63/10, A01B 61/04

(54) **VORRICHTUNG ZUR REB- UND ZEILENKULTURPFLANZENPFLEGE**
DEVICE FOR CARING FOR GRAPES AND PLANTS LAID OUT IN ROWS
DISPOSITIF D'ENTRETIEN DES PLANTES CULTIVÉES EN RANGÉES ET DES VIGNES

(43) Veröffentlichungstag der Anmeldung: 14.04.2021
(73) Patentinhaber: Rinklin, Julius Wilhelm, 79427 Eschbach (DE)
(72) Erfinder: RINKLIN, Julius Wilhelm, 79427 Eschbach (DE)
(74) Vertreter: Maucher Jenkins Patent- und Rechtsanwälte

(56) Entgegenhaltungen:
- WO-A1-2007/052324
- DE-U1- 202006 006 420
- FR-A1- 2 170 896
- FR-A1- 2 690 306
- US-A- 3 665 685
- US-A- 4 206 580

## Beschreibung

Die Erfindung betrifft eine Vorrichtung zur Reb- und Zeilenkulturpflanzenpflege, die einen Mulcher mit einem Schneidwerkzeug umfasst, wobei das Schneidwerkzeug eine mittels einem auf einer vertikalen Rotationsachse angeordneten Antrieb mit Gehäuse antreibbare Rotationsvorrichtung aufweist, die eine Mehrzahl Klingen trägt, die sich radial von der Rotationsachse weg erstrecken, und wobei das Schneidwerkzeug über das Gehäuse mit einer vertikalen Tragstange über eine Schwenkvorrichtung, die zumindest einen Dämpfer umfasst, vertikal beweglich verbunden ist.

Weinreben, kurz "Reben" in Rebkulturen oder -anlagen werden in Reihen bzw. Zeilen angepflanzt, wobei die Zeilen zueinander im Wesentlichen parallel verlaufen und zwischen den Rebzeilen der Abstand gleichmäßig ist und in sogenannten Direktzuglagen etwa 2 m beträgt, damit ein Fahrweg für Maschinen zur Rebpflege und Traubenernte gebildet wird. Die Rebstöcke selbst haben einen Abstand zueinander von etwa 1 m bis 1,20 m.

Bekannte Vorrichtungen zur Rebpflege dienen daher zum Einen dazu, das Wachstum von Austrieben am Stamm der Rebstöcke in einer Rebanlage zu kontrollieren und zum Anderen dazu, den Bodenbewuchs im sogenannten Unterstammbereich der Reben zu kontrollieren. Für die Pflege des Rebstocks und der Anlage ist dabei von Relevanz, dass der Boden um die Rebe herum optimal mit Nährstoffen versorgt wird, dass keine Triebe an der Rebe im unteren Bereich des Stammes wachsen, die lediglich Nährstoff- und Wasserverbraucher wären, aber keinen Ertrag bringen, und dass der Bewuchs im Fahrweg zwischen zwei Rebzeilen nicht unnötig Wasser und Nährstoffe verbraucht, aber dennoch so beschaffen ist, dass der Boden Feuchtigkeit hält und eine gewünschte Beschaffenheit bewahrt. Was hier für die Reben gilt, gilt im Übrigen genauso für Obstbäume, die in Zeilen, mit oder ohne Freispalier, gepflanzt sind.

Ein Mulchgerät zur Pflege von Bodenbewuchs an sich ist in der DE 10 2017 123 850 A1 offenbart. Es verfügt über eine variable Arbeitsbreite und kombiniert ein Schlegelmähwerk mit einem Sichelmähwerk. Im Weinbau wird die Pflege der Unterstammbereiche bspw. von Unterstammmulchern mit rotierenden Klingen erledigt.

Eine weitere Mulch- und/oder Mähmaschine ist in DE 10 2009 006 045 A1 beschrieben; sie ist derart gestaltet, dass auch im Bereich von Bäumen, Rebstöcken oder anderen Hindernissen keine größere Teilfläche unbearbeitet verbleibt. Dazu hat sie ein unrundes Führungsgehäuse, das zum Abwälzen an einem Hindernis drehbar gelagert ist, wobei in dem bodenwärts offenen GehäuseInnenraum dieses Führungsgehäuses zumindest ein drehantreibbares Mulch- und/oder Mähwerkzeug vorgesehen ist.

Aus der FR 2 170 896 A1 ist eine Vorrichtung zur Pflege von Rebflächen vorbekannt, um diese Rebflächen von Unkraut zu befreien, ohne den Boden umzudrehen. Die vorbekannte Vorrichtung weist dazu eine horizontal orientierte Schneidvorrichtung mit zwei horizontalen Rotationsklingen auf, die jeweils in einem nach unten offenen kreisförmigen Gehäuse rotieren, und die in ihrem Abstand zueinander an die Breite zwischen benachbarten Pflanzreihen angepasst werden können. Die jeweils eine dieser Rotationsklingen aufweisenden Gehäuse sind dazu auf gegenüberliegenden Seiten einer Tragkonstruktion über jeweils einen Schwenkarm mit der zwischen den Pflanzreihen bewegbaren Tragkonstruktion verbunden. Die beidseits der Tragkonstruktion aus- und einschwenkbaren Schwenkarme sind in einer horizontalen Ebene derart verschwenkbar, dass die Schwenkarme mit den die Rotationsklingen übergreifenden Gehäusen von den Reben gegen eine Rückstellkraft eingeschwenkt werden können. Die Tragkonstruktion ist mit den Schwenkarmen über einen gemeinsamen Tragarm verbunden, der zum Ausweichen von Bodenunebenheiten in einer vertikalen Ebene verschwenkbar ist. Da die Tragkonstruktion mit den beidseits der Tragkonstruktion gehaltenen Schwenkarmen zwischen benachbarten Pflanzreihen verfahren werden muss, ist ein spezielles Trägerfahrzeug mit hoher Bodenfreiheit notwendig.

Aus der DE 20 2006 006 420 U1 kennt man bereits ein Mähgerät zum Freischneiden von Zaunpfählen beziehungsweise überstehenden Hindernissen an Straßenrändern. Damit das vorbekannte Mähgerät diese überstehenden Hindernisse weitgehend umgreifen und dabei den umstehenden Bewuchs abschneiden kann, ist der das vorbekannte Mähgerät tragende Ausleger mit dem Anbaurahmen eines Trägerfahrzeugs über ein Zwischengelenk verbunden. Das Zwischengelenk ist im Längsverlauf hinter dem Anbaurahmen mittels einer vertikalen Achse schwenkbar gelagert und über eine horizontale Achse am Ausleger schwenkbar gehalten. Auf dem Ausleger ist ein Antriebsmotor vorgesehen, der über einen unter dem Ausleger befindlichen Keilriemen ein an dem gegenüberliegenden Ende des Auslegers gelagerte mehrrillige Keilriemenscheibe antreibt. Darunter befinden sich drei sternförmig angeordnete Schwenkarme, die um eine vertikale Drehachse drehbar gelagert sind. Jeder Schwenkarm trägt ein Schneidwerkzeug, welches als Messerteller ausgestaltet ist, der mit Schneidmessern bestückt ist. Da die in Form eines dreistrahligen Sternes angeordneten Schwenkarme stets bestrebt sind, sich um die Drehachse zu drehen und da das vorbekannte Mähgerät sich an dem Zaunpfahl oder dergleichen überstehenden Hindernis praktisch abrollt, eignet sich das vorbekannte Mähgerät zum Freischneiden von Zaunpfählen und anderen festen Gegenständen, während das vorbekannte Mähgerät zum Freischneiden auch von, in Pflanzreihen angebauten empfindlichen Pflanzen weniger gut geeignet ist.

Aus der US 3 665 685 A kennt man bereits eine Vorrichtung zum Schneiden der auf beiden Seiten eines Zauns befindlichen Vegetation. Die vorbekannte Vorrichtung weist ein Fahrgestell auf, das schwenkbar hinter einem Traktor montiert werden kann. Die vorbekannte Vorrichtung hat einen Rahmen, der eine bodenseitig offene U-Form aufweist und am Fahrgestell um eine im Wesentlichen vertikale Achse schwenkbar gehalten ist. An den freien Stegen des U-förmigen Rahmens ist jeweils ein etwa L-förmiges Element mit einem vertikalen Arm schwenkbar gehalten, welche L-förmigen Elemente am freien Armende ihres horizontalen Armes jeweils einen Mulch- oder Mähkopf tragen. Da die an ihren horizontalen Armenden die Mulch- oder Mähköpfe tragenden L-förmigen Elemente gegeneinander verspannt sind, und da der Rahmen U-förmig ausgebildet ist, kann die vorbekannte Vorrichtung mit ihrem U-förmigen Rahmen über eine Reihe von Zaunpfählen hinweg gezogen werden, wobei die von den L-förmigen Elementen getragenen Mulch- oder Mähköpfe das Gras beidseits der Zaunpfähle kürzen. Da die vorbekannte Vorrichtung nur zum Freischneiden von Zaunpfählen vorgesehen ist, werden mit der vorbekannten Vorrichtung weitergehende Kultivierungsmaßnahmen nicht angestrebt.

Aus der US 4 206 580 A kennt man bereits eine Vorrichtung zum Mulchen ausgedehnter Gras- oder Wiesenflächen, die an dem freien Armende eines horizontal orientierten und teleskopierbaren Auslegerarmes einen Mähkopf trägt. Der Auslegerarm ist über eine horizontale Schwenkachse mit einer Fahrzeughalterung verbunden, die an einem Traktor oder einem anderen geeigneten Trägerfahrzeug montiert werden kann. Damit der Mähkopf bodenseitig überstehenden Hindernissen ausweichen kann, ist der Auslegerarm von einer ausgefahrenen Position gegen die Kraft einer Rückstellfeder in eine demgegenüber eingefederte Position bewegbar. Damit der Mähkopf bei größeren Hindernissen auch nach oben ausweichen kann, ist der Auslegerarm um die horizontale Schwenkachse gegen die Kraft einer zweiten Rückstellfeder nach oben bewegbar. Da der Mähkopf der vorbekannten Vorrichtung nur von der ausgefahrenen Position in eine eingefahrene Position bewegt werden kann und da sich der Mähkopf im Übrigen nur um die horizontale Schwenkachse Verschwenken lässt, ist die vorbekannte Vorrichtung unter den beengten Verhältnissen zwischen benachbarten Pflanzreihen weniger gut einsetzbar.

Aus der WO 2007/052324 A1 kennt man bereits eine Vorrichtung zum Mulchen von Gras, die einen Hauptkörper hat, welcher von einem Traktor gezogen werden kann. Der Hauptkörper ist mit einer mobilen Stütze für ein Paar von Armen versehen. Jeder dieser Arme trägt an seinem freien Armende einen kreisförmigen Schneidkopf. Jeder Schneidkopf ist mit einem Rotationsantrieb versehen, der mit einer aus Messerklingen oder einer Bürste gebildeten Schneidvorrichtung drehangetrieben werden kann. Um jeden Schneidkopf befindet sich eine kreisförmige drehbare Krone, welche die Hindernisse, mit denen sie in Kontakt kommt, nicht beschädigt. Die Arme werden von Druckmitteln in Richtung zueinander beaufschlagt, wobei die Kraft dieser Druckmittel so bemessen ist, dass sie die Arme mit ihren die Schneidköpfe tragenden Armenden voneinander entfernen, wenn die Schneidköpfe mit einem Hindernis in Kontakt kommen.

Zur Pflege der Rebstöcke und insbesondere deren Unterstammbereich sind sogenannte Stammbürsten bekannt. "Bürste" meint dabei eine Walze, die eine Drehachse hat und an ihrem Umfang mit Riemen oder Lappen oder Faden ausgerüstet ist, und die, wenn sie in Drehbewegung versetzt ist, mit den Riemen oder Lappen an dem Teil des Rebenstamms, den sie touchieren, die Triebe abschneiden. Die Bürsten können bodenparallel oder senkrecht zum Boden rotieren; sie regulieren entsprechend nur Stammaustriebe oder auch einen Teil des Bodenbewuchses.

So beschreibt etwa die DE 699 03 086 T2 eine Schneidevorrichtung oder Ausästungsvorrichtung und einen Traktor mit dieser Vorrichtung, wobei die Schneidevorrichtung einen Abrank- oder Ausschneidekopf zum Abranken von Weinreben aufweist. Dabei hat der Kopf Mittel für die Einstellung der Stärke der Schlagkraft der Riemen auf die Vegetation und umfasst automatische Beabstandungsmittel, die ermöglichen, die Oberfläche im Wesentlichen immer im gleichen Abstand zu der Vegetation zu halten und die Stärke der Schlagkraft der Riemen auf die Vegetation einzustellen. Der Kopf kann eine im Wesentlichen senkrechte Platte mit einer ebenen Fläche haben, die zur Vegetation gerichtet ist, wobei die Platte, die abnehmbar auf einer Welle eines Motors oder Getriebemotors befestigt ist, eine zu der Oberfläche im wesentlichen senkrechte Drehachse hat und parallel zu der palisierten Vegetation verschoben werden kann.

Aus der FR 2 690 306 A1 kennt man bereits eine Vorrichtung, die auch zum Entfernen der Triebspitzen von Weinreben verwendet werden kann, die entlang den in Reihen angepflanzten Reben erscheinen. Die vorbekannte Vorrichtung weist dazu einen an einem Traktor befestigbaren ersten Teil sowie einen beweglichen zweiten Teil auf, der in vertikaler Richtung bewegbar und in horizontaler Richtung aus- und einfahrbar ist. Dabei besteht der bewegliche Teil der vorbekannten Vorrichtung aus einem horizontalen Querbalken, der quer zur Fahrtrichtung des Trägerfahrzeugs orientiert ist und der zwei ein- und ausfahrbare Gleitbalken trägt. An den freien, jeweils nach außen weisenden Enden der Gleitbalken ist jeweils ein drehantreibbarer Bürstenkopf mit um eine vertikale Drehachse rotierenden Borsten vorgesehen. Dabei sind dem die Gleitbalken tragenden Querbalken Tragräder zugeordnet, die den Querbalken und die an ihm über die Gleitbalken getragenen Bürstenköpfe in einer etwa gleichbleibenden Arbeitshöhe halten.

Auch Fadenbürsten oder Mähbürsten mit bodenparalleler Drehachse, die mit besonders hoher Drehzahl den Unterstammbereich schlagen, regulieren den Stammbewuchs.

Die Funktionsweise einer Fadenbürste ist bspw. aus der EP 2 092 816 B1 bekannt, die
einen Mulchkopf eines Mulch- oder Rodegerätes beschreibt, der für die Grasvertilgung im Bereich zwischen den Baumreihen von Obst- oder Rebanlagen eingesetzt wird, und mit einer parallel zur Bodenfläche rotierenden Welle für Fäden und einer Schutzabdeckung ausgestattet ist, wobei die Fäden radial angeordnet sind und auf der gesamten Wellenlänge verteilt sind.

Ferner sind Fahrgassenmulchgeräte oder Tragrahmen, die mit Stammbürsten und/oder Unterstammmulchern kombiniert sind, an sich bekannt. Allerdings sind die bekannten Maschinen so ausgebildet, dass jeweils von der Fahrgasse aus eine halbe Länge der beiden an die Fahrgassen angrenzenden Bodenbereiche um die Rebe gepflegt wird.

Einen kombinierten "Stockputzer" beschreibt etwa die DE 202 009 88 U1. Die Vorrichtung zum Entfernen von unerwünschten pflanzlichen Wüchsen im Bereich von Pflanzenstämmen dort wird insbesondere als Zusatzeinrichtung an vorhandenen Gerätschaften, wie beispielsweise breitenverstellbare Mulchgeräte zur Zwischenstockbearbeitung, eingesetzt. Der kombinierte Stockputzer kann entlang einer Rebzeile geführt werden, um deren eine Längsseite zu bearbeiten; weil die beiden Gummirotoren dort unmittelbar hintereinander geschaltet sind, können zwei Arbeitsgänge bei einer Durchfahrt durch die Fahrgasse entlang einer Längsseite einer Rebzeile erledigt werden.

Ausgehend von diesem Stand der Technik ist es Aufgabe der vorliegenden Erfindung, eine verbesserte Vorrichtung zur Pflege von Reb- und Zeilenkulturpflanzenanlagen bereitzustellen, die es ermöglicht, bei optimierter Schonung der Kulturpflanzen zeiteffizient Reben im Unterstammbereich zu pflegen.

Die erfindungsgemäße Lösung dieser Aufgabe besteht in der Bereitstellung einer Vorrichtung nach Anspruch 1.

Weiterbildungen und bevorzugte Ausführungsformen der erfindungsgemäßen Vorrichtung sind in Unteransprüchen ausgeführt.

Die erfindungsgemäße Vorrichtung zur Pflege von Reb- und Zeilenkulturpflanzenanlagen umfasst die Merkmale des unabhängigen Anspruchs 1, unter anderem einen Mulcher mit einem Schneidwerkzeug. Das Schneidwerkzeug weist eine Rotationsvorrichtung auf, die mittels einem auf einer vertikalen Rotationsachse angeordneten Antrieb mit Gehäuse/Halterung antreibbar ist und die eine Mehrzahl Klingen trägt, die sich radial von der Rotationsachse weg erstrecken. Erfindungsgemäß ist das Schneidwerkzeug über die Halterung/das Gehäuse mit einer vertikalen Tragstange über eine Schwenkvorrichtung, die zumindest einen Dämpfer umfasst, horizontal und vertikal beweglich verbunden.

Ein Einsatzbereich für die Erfindung liegt insbesondere in der Weinkultur. Sie ist jedoch generell für in Reihe bzw. Spalierform gepflanzte Kulturpflanzen verwendbar. Wird daher im Folgenden der Begriff "Rebe" verwendet, sind damit stets verallgemeinernd Reihenkulturpflanzen inbegriffen. Ebenfalls als Synonyme zu verstehen sind die Begriffe "Reihe" und "Zeile". Wird daher von "halbzeilig" gesprochen, so ist darunter das Arbeiten an einer Seite einer Rebzeile zu verstehen, "überzeilig" meint hingegen, dass gleichzeitig beide Seiten der gleichen Rebzeile bearbeitet werden. Demgegenüber wird bei Betrachtung von der Fahrgasse her von "einseitigem" bzw. "zweiseitigem" Arbeiten gesprochen und kann jeweils das halb- oder überzeilige Bearbeiten der rechts und/oder links zur Fahrgasse verlaufenden Rebzeile umfassen. Die erfindungsgemäße Vorrichtung weist ferner ein Bürstenwerkzeug auf, das einen auf einer vertikalen Rotationsachse angeordneten Antrieb mit Gehäuse aufweist. Das Bürstenwerkzeug ist so gestaltet, dass an einem von dem Antrieb des Bürstenwerkzeugs wegweisenden Ende, das bei Nutzung zur Rebpflege dem in Richtung Boden weisenden Teil entspricht, der vertikalen Rotationsachse eine Vielzahl Rundschnüre, Faden, Riemen oder Lappen angeordnet ist. Diese Schnüre oder Lappen können entlang der Länge der Rotationsachse und/oder entlang deren Umfang regelmäßig oder unregelmäßig verteilt vorliegen. Das Bürstenwerkzeug dient dazu, die Triebe an einem bodennahen Teil des Rebenstamms durch direkten Kontakt mit den Riemen, Lappen etc. abzuschneiden.

Dabei ist das Bürstenwerkzeug so angeordnet, dass es bei Verwendung der Vorrichtung mit einer Maschine zu deren Betrieb in Kombination mit einem Fuhrfahrzeug, bspw. einem Traktor, dem Mulcher nachgelagert ist. D.h. es wird bei Betrieb einer solchen Vorrichtung, im Folgenden als "kombinierte Vorrichtung" bezeichnet, zunächst der um die Rebstöcke herum vorliegende Bodenbewuchs von Gräsern und sonstigen Kleinpflanzen durch den Mulcher beschnitten, ehe im gleichen Arbeitsgang mit dem Bürstenwerkzeug die Austriebe der Reben im Unterstammbereich abgeschnitten bzw. abgeschlagen werden. Vorteilhaft können sich die Bürsten, Lappen oder Schnüre oder auch deren Antriebswelle als Rotationsachse nicht in dem Bodenbewuchs verfangen, sind also in ihrer Rotation nicht behindert.

Vorteilhaft stellt die Vorrichtung einen Mulcher bereit, der die Gefahr, die in Reihe stehenden Reben in deren Stammbereich zu schädigen, minimiert, indem das Schneidwerkzeug dank der Schwenkvorrichtung Bodenhindernissen ausweicht, wenn er diese kontaktiert. Der Dämpfer sorgt dafür, dass der Mulcher über den Boden getragen wird und bei Berühren eines Hindernisses am Boden eine kontrollierte Ausweichbewegung nach oben durch Schwenken der passiven Schwenkvorrichtung ausführt. So kann das Mulchen ohne Unterbrechung fortgesetzt werden, da sich der Mulcher durch sein Eigengewicht wieder absenkt, wobei die tiefstmögliche Position des Mulchers mit Schneidwerkzeug durch den Dämpfer begrenzt wird.

Nach einer weiteren Ausführungsform ist die vertikale Tragstange in einem Lager drehbar gelagert, sodass sie um ihre eigene Achse rotieren kann. So kann das mit der vertikalen Tragstange, die als nicht angetriebene Welle fungiert, verbundene Schneidwerkzeug, resp. der gesamte Mulcher, sich in horizontaler Richtung von Rebstämmen, gleichfalls aber auch anderen Hindernissen wie bspw. Stützvorrichtungen der Reben, ausweichend wegbewegen.

In einer weiteren Ausführungsform weist die antreibbare Rotationsvorrichtung einen Gleitteller auf, der mit dem Antrieb über die Rotationsachse gekoppelt ist und an dem die Klingen derart befestigt sind, dass sie sich zum Schneiden über einen Umfangsrand des Gleittellers hinaus erstrecken. Sie weist ferner eine Drehscheibe auf, die über ein rotationsaxial angeordnetes Kopplungselement mit dem Gleitteller gekoppelt und bevorzugt um die Rotationsachse drehbar gelagert ist. An der Drehscheibe ist umfänglich zumindest ein Puffer angeordnet, der bevorzugt ein in einer Umfangsnut eingelegter Dämpfungsring, wie ein mit Luft befüllter Reifen, dessen Luftdruck variabel einstellbar ist, oder ein umfänglich angeordneter Wulst, bevorzugt aus einem Elastomer, ist.

Dabei weist die Drehscheibe mit Puffer einen Umfang auf, der größer ist als ein Kreisumfang, der den Gleitteller mit Klingen umschreibt.

Durch diese Ausgestaltung wird jeglicher Kontakt der Klingen mit Rebstöcken und anderen Hindernissen vermieden. Bei Annäherung an einen Rebstamm erfolgt maximal eine Kontaktierung über den Puffer, der in der bevorzugten Ausführungsform nicht nur als Abstandshalter und quasi Auslöser für die Ausweichbewegung, die über die Schwenkvorrichtung des Schneidwerkzeugs ausgeführt wird, dient, sondern durch elastische Verformbarkeit den Kontakt möglichst schonend für den Stamm abfängt.

Vorteilhaft wird so ein besseres Arbeitsergebnis erzielt, weil kein unnötig großer Sicherheitsabstand eingehalten werden muss und somit der Mulcher ausreichend nahe am Stamm entlang die Gräser kürzt.

Beim Berühren eines Rebstamms dreht sich die Drehscheibe, und der gesamte Mulcher, um die drehbar gelagerte vertikale Tragstange von dem Rebstamm weg. Bei nicht drehbaren Mulchern entsteht bei Kontakt mit einer Rebe stets ein der Pflanze kurz- oder langfristig schadendes Reibungsmoment. Durch die erfindungsgemäße Art der Lagerung des Mulchers rollt sich dieser am Rebstock ab, sodass der Stock nur berührt, aber nicht gestreift wird.

Gemäß einer weiteren Ausführungsform der Vorrichtung ist der Dämpfer der Schwenkvorrichtung eine Federvorrichtung, die bevorzugt eine Zug-Schraubenfeder oder eine Gaszugfeder ist. Sie ermöglicht eine frei bewegliche, quasi "schwimmende" Anordnung des Mulchers zur Absicherung gegen das Anstoßen an Hindernissen, in der die Höhe (vertikale Lage) flexibel ist.

In einer bevorzugten Ausführungsform ist die Schwenkvorrichtung mit einer Vorrichtung zur Einstellung einer Vorspannung gekoppelt, über die auch die Ausgangsposition des Mulchers, vor allem aber dessen Ausweichverhalten gegenüber den Stämmen einstellbar ist. Die Vorrichtung zur Einstellung einer Vorspannung kann beispielsweise über einen Hebel, der an einer Stelle mit der vertikalen Tragstange verbunden ist, sowie eine Schraubenfeder und eine damit verbundene Kette, deren Länge die Vorspannungskraft der Feder regelt, realisiert sein, wobei die Kette die Feder mit einem nicht beweglich gelagerten Teil der Vorrichtung verbindet.

Des Weiteren kann eine Ausführungsform der Vorrichtung vorsehen, dass die Schwenkvorrichtung zumindest ein Parallelogramm aufweist. Das Parallelogramm wird aus einem Paar übereinander angeordneter, paralleler Streben gebildet, deren jeweils eines Strebenende gelenkig direkt oder über eine Zusatzhalterung an der vertikalen Tragstange und deren jeweils anderes Strebenende gelenkig direkt oder über eine Zusatzhalterung an dem Gehäuse des Antriebs angeordnet sind. Dabei können die Strebenenden innenseitig in der jeweiligen Zusatzhalterung aufgenommen sein, sodass ein Verdrehen quer zu der Gelenkachse vermieden wird. Unter "gelenkig" ist hierbei gemeint, dass eine Rotation entlang zumindest einer Achse ermöglicht wird.

Insbesondere bevorzugt ist die Ausführungsform mit Parallelogramm und Federvorrichtung, wobei dann die Federvorrichtung besonders bevorzugt entlang einer Diagonalen des durch die Streben gebildeten Parallelogramms angeordnet ist.

In einer weiteren Ausführungsform ist vorgesehen, dass das Gehäuse des Schneidwerkzeugs oder das Gehäuse des Bürstenwerkzeugs, oder beide, zumindest einen Anschlussstutzen aufweist bzw. aufweisen, der mit einer elektrischen bzw. hydraulischen Leitung verbindbar ist. Wird der Anschlussstutzen mit einer entsprechenden Leitung verbunden, die von einer Maschine zum Betreiben der Vorrichtung oder einem diese Maschine aufnehmenden Trägerfahrzeug ausgeht, können die Antriebe, die bevorzugt hydraulische Antriebe sind, angesteuert und betrieben werden.

Die Vorrichtung weist in einer weiteren Ausführungsform Möglichkeiten zur horizontalen und/oder vertikalen Positionierung des Mulchers auf. Dazu ist die vertikale Tragstange des Mulchers erfindungsgemäß längenverstellbar, bevorzugt teleskopierbar längenverstellbar. Erfindungsgemäß ist die vertikale Tragstange an einem horizontalen Arm befestigt, wobei der horizontale Arm ebenfalls bevorzugt längenverstellbar, besonders bevorzugt teleskopierbar längenverstellbar ist. Der horizontale Arm ist erfindungsgemäß höhenverstellbar an einem vertikalen Tragarm, bevorzugt einem längenverstellbaren Tragarm, besonders bevorzugt an einem teleskopierbar längenverstellbaren Tragarm angeordnet. So kann die Positionierung des Mulchers den Bodengegebenheiten angepasst werden.

Die Erfindung sieht ferner vor, dass an dem Tragarm auch das Bürstenwerkzeug angeordnet ist, und zwar über einen Tragwinkel, der mit dem Gehäuse des Bürstenwerkzeugs verbunden ist, wodurch der Mulcher und das Bürstenwerkzeug eine kombinierte Vorrichtung bilden, die bevorzugt kombiniert oder separiert höhen- und breitenverstellbar ist. So können die Positionen von Mulcher bzw. Schneidwerkzeug und Bürstenwerkzeug zueinander durch Verstellen des horizontalen Arms und der vertikalen Tragstange eingestellt werden. Die Anpassung der Höhe der kombinierten Vorrichtung erfolgt über den längenverstellbaren Tragarm. Alternativ ist es möglich, dass das Gehäuse des Bürstenwerkzeugs längenverstellbare Tragelemente zum gezielten Positionieren des Bürstenwerkzeugs aufweist.

Das Bürstenwerkzeug ist manuell deaktivierbar oder es kann in einer weiteren Ausführungsform der erfindungsgemäßen Vorrichtung einen Sensor aufweisen, der jüngere Pflanzen an geringem Laubbewuchs erkennen kann und auf deren Erkennung hin die Rotation des Bürstenwerkzeugs ausgeschaltet werden kann, sodass Triebe von Jungpflanzen geschont werden.

In noch einer Ausführungsform der erfindungsgemäßen Vorrichtung ist oberhalb der Rotationsachse des Schneidwerkzeugs und des Bürstenwerkzeugs eine Schutzhaube angeordnet, die dafür sorgt, dass abgeschnittene Pflanzenteile nicht ungehindert nach oben wegfliegen. Ferner wird der darüber liegende Teil der Reben davor geschützt, ungewollt in die Arbeitsbereiche der Werkzeuge einzudringen und beschädigt zu werden und die Vorrichtung selbst vor Störeinflüssen von außen geschützt. Die Schutzhaube kann beide Werkzeuge einzeln oder als Gesamtheit überspannen und ferner umfänglich angeordnete abgewinkelte Bereiche zum seitlichen Schutz umfassen. Sie schützt nicht nur die Vorrichtung, sondern auch deren Bediener vor Verletzungen.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig.1**: eine Seitenansicht einer kombinierten Vorrichtung zur Reb- und Zeilenkulturpflanzenpflege mit einem Mulcher und einem Bürstenwerkzeug,
- **Fig. 2**: eine Draufsicht auf die kombinierte Vorrichtung aus Fig. 1,
- **Fig. 3**: eine Draufsicht auf eine überzeilige Maschine zur Reb- und Zeilenkulturpflanzenpflege mit zwei der Vorrichtungen aus Fig. 1 und 2,
- **Fig.3a**: eine Detailansicht des Ausschnitts A aus Fig. 3
- **Fig. 3b**: eine alternative Darstellung der Vorrichtung aus Fig. 3 in Draufsicht, in Bezug auf den Verlauf einer schematisch angedeuteten Rebzeile,
- **Fig. 4**: eine Heckansicht der Maschine aus Fig. 3,
- **Fig.4a**: eine Detailansicht des Ausschnitts B aus Fig. 4,
- **Fig. 5**: eine Frontansicht der Maschine aus Fig. 3,
- **Fig.5a**: eine Detailansicht des Ausschnitts C aus Fig. 5,
- **Fig. 6**: eine perspektivische Ansicht der Maschine aus Fig. 3,
- **Fig. 7**: eine Seitenansicht der Maschine aus Fig. 3,
- **Fig.7a**: eine Detailansicht des Ausschnitts D aus Fig. 7,
- **Fig.7b**: eine Detailansicht des Ausschnitts E aus Fig. 7,

Die Erfindung betrifft eine Vorrichtung, die besonders schonend und gleichzeitig höchst effizient in der Pflege von Reb- und Zeilenkulturpflanzenanlagen eingesetzt werden kann, sowie eine Maschine, die an ein (Träger-)Fahrzeug gekoppelt und mit der die Vorrichtung zur halb- oder überzeiligen, ein- oder zweiseitigen Rebpflege betrieben werden kann.

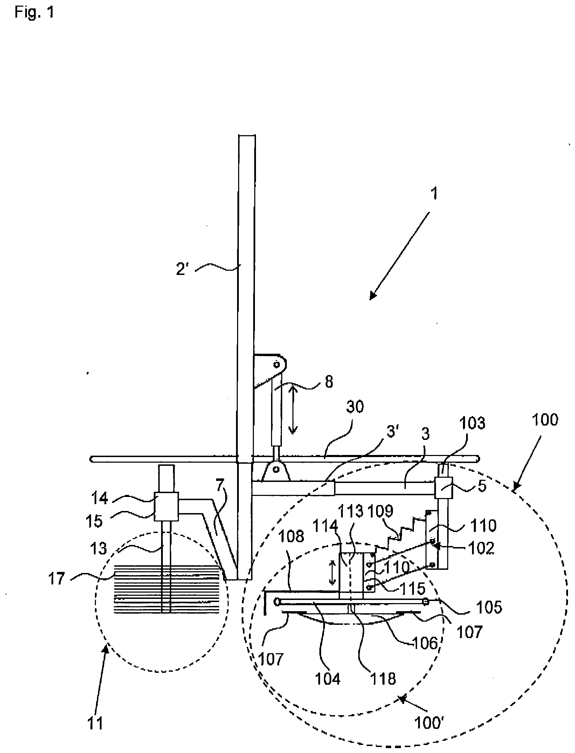

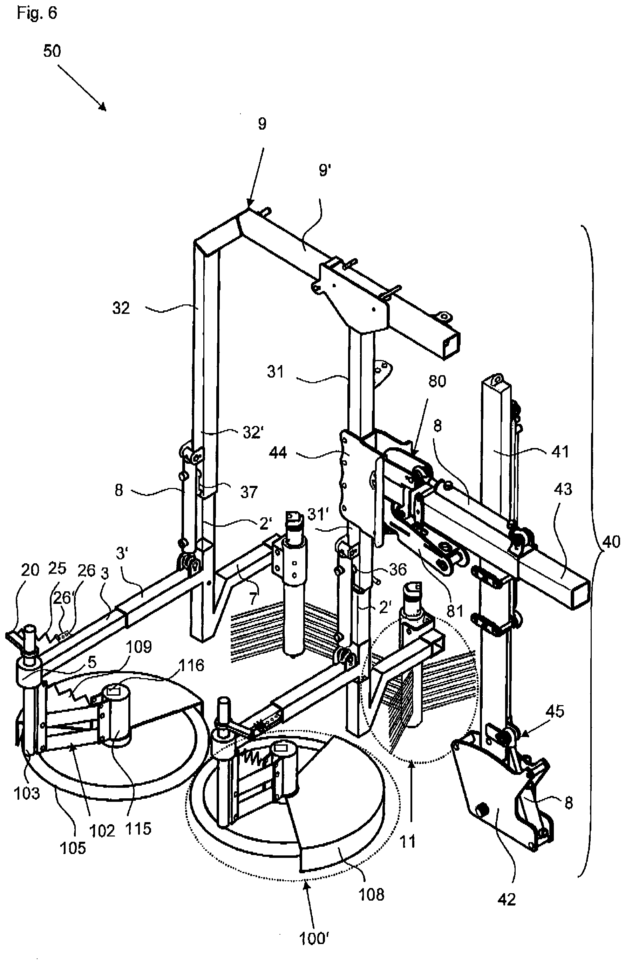

Die Vorrichtung in Fig. 1 zeigt eine kombinierte Vorrichtung 1, die erfindungsgemäß einen Mulcher 100 mit Schneidwerkzeug 100' aufweist. Das Schneidwerkzeug 100' hat einen Antrieb 114 mit einem Gehäuse 115, der bevorzugt ein hydraulischer Antrieb ist und entsprechende Anschlussstutzen 116 (in Fig. 6 gezeigt) für Leitungen aufweist. Der Antrieb ist auf einer Rotationsachse 113 angeordnet und treibt die Rotationsvorrichtung des Schneidwerkzeugs 100' an.

Eine Schwenkvorrichtung 102 wird in der gezeigten Ausführungsform durch zwei ein Parallelogramm 102 bildende Streben, deren Enden je in einer Zusatzhalterung 110 aufgenommen sind, sowie einen Dämpfer 109 in Form einer Feder 109 gebildet. Eine Zusatzhalterung 110 ist am Gehäuse 115 des Antriebs 114 angeordnet, die andere an einer vertikalen Tragstange 103 des Mulchers 100. Die Enden der Streben sind gelenkig damit verbunden, sodass das Schneidwerkzeug 100' durch eine an dem Gleitteller 106 angreifende Kraft vertikal umpositioniert werden kann.

Die Feder 109 ist als Zugfeder 109 ausgebildet und hält das Gewicht des Mulchers 100 so, dass dieser knapp über dem Boden Z quasi schwimmend gelagert ist, und nicht mit seinem Gewicht auf dem Gleitteller 106 aufliegt und diesen zu Boden drückt. Berührt der Mulcher 100, etwa bei Unebenheiten, den Boden, so weicht er durch die gespannten Feder 109 unmittelbar nach oben aus, und bewegt sich anschließend durch sein Eigengewicht wieder gen Boden. Diese Ausweichbewegung in vertikaler Richtung wird durch das Parallelogramm 102 ermöglicht, das eine passive Höhenänderung erst erlaubt. Der Gleitteller 106 kann (siehe Fig. 1) zu seiner Mitte hin leicht nach unten ausgewölbt sein, sodass der Bodenkontakt dort und nicht im Bereich der Klingen 107 erfolgt.

Zugleich kann das Schneidwerkzeug 100', mithin der gesamte Mulcher 100 auch, wenn das Schneidwerkzeug 100' ein Hindernis, beispielsweise den Stamm einer Rebe 12 tou-εhiert, in horizontaler Richtung ausweichen. Dazu ist die vertikale Tragstange 103, mit der das Schneidwerkzeug 100' verbunden ist, in einem Lager 5 um diese vertikale Achse drehbar gelagert. Das Lager 5 wird beispielsweise durch ein Rohrstück, in dem Kugellager vorliegen, gebildet, in das die vertikale Tragstange 103 aufgenommen wird und die somit als Welle für eine ausweichende Schwenkbewegung RM des Mulchers 100 ausgebildet ist. Umfährt der Mulcher 100 der Vorrichtung 1 einen Rebstamm (oder ein anderes Hindernis) und kontaktiert diesen, wird der Mulcher 100 vom Stamm weg bewegt, indem die vertikale Tragstange 103 (durch den Gegendruck des Stamms) ein Stückweit um ihre eigene Achse rotiert.

Nicht nur die Schwenkvorrichtung 102 und die drehbar im Lager 5 gelagerte vertikale Tragstange 103, sondern auch die weitere Gestaltung des Mulchers 100 dient dem Schutz der Reben während des Arbeitsvorgangs. Auf der Rotationsachse 113 des Antriebs 114 ist eine Drehscheibe 104 angeordnet, die umfänglich von einem Dämpfungsring 105 umgeben ist. über ein Kopplungselement 118, das ebenfalls auf der Rotationsachse 113 angeordnet ist, ist ein Gleitteller 106, an dem umfänglich mehrere Klingen 107 vorliegen, an den Antrieb 114 gekoppelt. Der Durchmesser des Gleittellers 106 mitsamt der Klingen 107 ist dabei geringer als der Durchmesser der Drehscheibe 104 mit Dämpfungsring 105, sodass jeglicher seitlicher Kontakt des Schneidwerkzeugs 100' zunächst über den Dämpfungsring 105 erfolgt. So kann sich das Schneidwerkzeug 100' weich und ohne Schaden zu hinterlassen bspw. am Stamm einer Rebe 12 abrollen, da die Drehscheibe 104 drehbar gelagert ist. Gleichzeitig wird eine Ausweichbewegung des Mulchers 100 in horizontaler Richtung ausgelöst, die dank der im Lager 5 drehbar gelagerten vertikalen Tragstange 103 in die jeweilige Ausweichrichtung ausgeführt werden kann.

Der Mulcher 100 ist über die vertikale Tragstange 103 höhenverstellbar ausgebildet, wobei die Verstellbarkeit in dem dargestellten Ausführungsbeispiel über ein teleskopierbares Rohr, in dem die vertikale Tragstange vertikal verschiebbar ist, realisiert wird. Über das Lager 5 ist die Tragstange 103 mit einem teleskopierbaren und somit längenverstellbaren Arm 3,3' gekoppelt, der seinerseits mit einem vertikalen Tragarm 2 verbunden ist, der hier ein ebenfalls längenverstellbarer vertikaler Tragarm 2' ist. Beispielhaft ist ein Verschiebe-Mechanismus mit einem Hydraulikzylinder 8 gezeigt, durch den die Länge angepasst werden und somit das am vertikalen Tragarm 2' angeordnete Schneidwerkzeug 100' komplett angehoben werden kann.

Ebenfalls mit dem vertikalen Tragarm 2' verbunden ist ein weiteres Werkzeug, genauer ein Bürstenwerkzeug 11, das bei Aktivierung des Hydraulik-Zylinders 8 gemeinsam mit dem Schneidwerkzeug 100' in der Höhe variiert wird. Dieses Bürstenwerkzeug 11 weist ebenfalls einen auf einer vertikalen Rotationsachse 13 angeordneten Antrieb 14 mit Gehäuse 15 auf. Die Gehäuse 15, 115 können jeweils nur den Antrieb 14, 114 selbst oder das gesamte Schneid- bzw. Bürstenwerkzeug 100', 11 einhausen und bilden zugleich eine Halterung für die Antriebe 14, 114 und die jeweiligen Werkzeuge 100', 11. Das Bürstenwerkzeug 11 weist an seiner Rotationsachse 13 in einem Bereich, der von dem Antrieb 14 weg weist, eine Vielzahl an Rundschnüren 16 bzw. Lappen 17 (figürlich gleich dargestellt) auf. Wird das Bürstenwerkzeug 11 in Rotation versetzt, schlagen die Rundschnüre 16 bzw. Lappen 17 gegen diejenigen Triebe der Reben 12, die auf Arbeitshöhe, also in einem Abschnitt unmittelbar über dem Erdboden E, austreiben und trennen diese ab.

Bürstenwerkzeug 11 und Schneidwerkzeug 100' können unabhängig voneinander nach Bedarf an- und abgeschaltet werden und in ihrer Drehzahl beliebig angepasst werden.

Die Verbindung zum Tragarm 2' wird über einen Tragwinkel 7 bereitgestellt, wobei auch andere Anordnungen, etwa vergleichbar mit den oben für den Mulcher beschriebenen, möglich sind.

Das Schneidwerkzeug 100' in Fig. 1 weist ein Leitblech 108 für das Schnittgut auf, damit dieses nicht in tangentialer Richtung weggeschleudert wird und somit auch nicht in die Bürsten (Lappen 17, Schnüre 16) des nachfolgenden Bürstenwerkzeugs 11 gelangt.

Ein Leitbügel 30 ist an der Vorrichtung 1 oberhalb der Werkzeuge 100', 11, angeordnet und erstreckt sich entlang des horizontalen Arms 3' auf derjenigen Seite der Vorrichtung 1, die bei Bearbeitung der Rebzeile 12' zugewandt ist. Der Leitbügel 30 sorgt für einen Mindestabstand, der zur Rebzeile 12' bzw. den einzelnen Stämmen 12 eingehalten wird. Eine einfachere, in den Figuren nicht gezeigte Vorrichtung umfasst lediglich einen Mulcher 100 mit Schneidwerkzeug 100'. Die Kombination mit dem Bürstenwerkzeug ist also optional; ebenfalls nicht dargestellt aber denkbar sind Kombinationen mit anderen Werkzeugen, die bei der Pflege und Bearbeitung von Pflanzenanlagen in Zeilenkultur verwendet werden, bspw. zum Düngen oder zur Bodenbearbeitung.

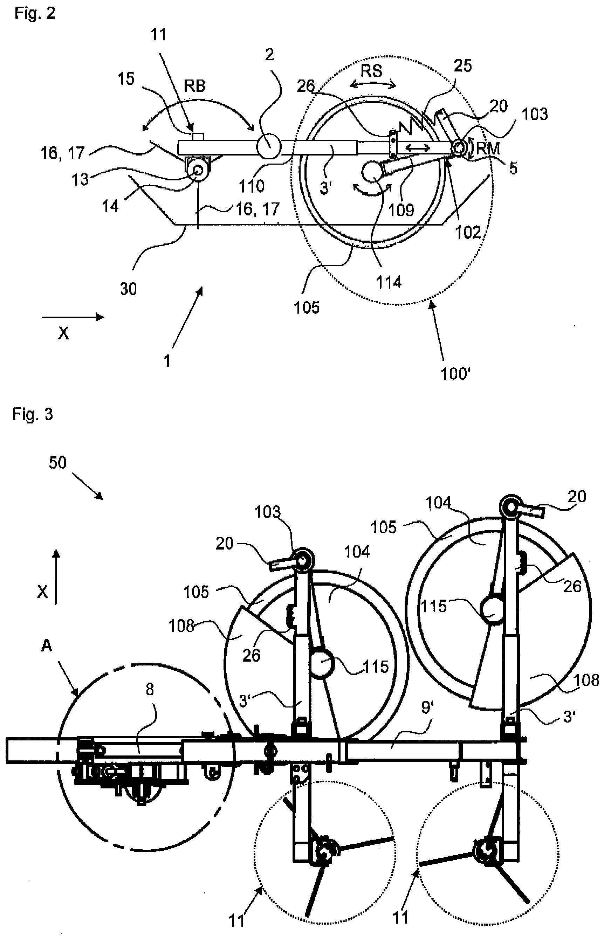

**Fig. 2** zeigt die kombinierte Vorrichtung 1 in einer Draufsicht, wobei die durch Pfeil angezeigte Fahrt- bzw. Arbeitsrichtung X vorsieht, dass der Mulcher 100 dem Bürstenwerkzeug 11 vorausläuft. Eine Umkehrung der Reihenfolge ist an sich möglich, doch wird gerade durch das Vorauslaufen des Mulchers 100 der Arbeitsbereich für das Bürstenwerkzeug 11 freigeschnitten, sodass dieses ungehindert den Stammbereich der Reben 12 erreichen kann. Die möglichen Rotationsrichtungen RS, RB der jeweiligen Werkzeuge 100', 11 sind ebenfalls zu sehen und sind nicht auf eine Vorzugsrichtung festgelegt.

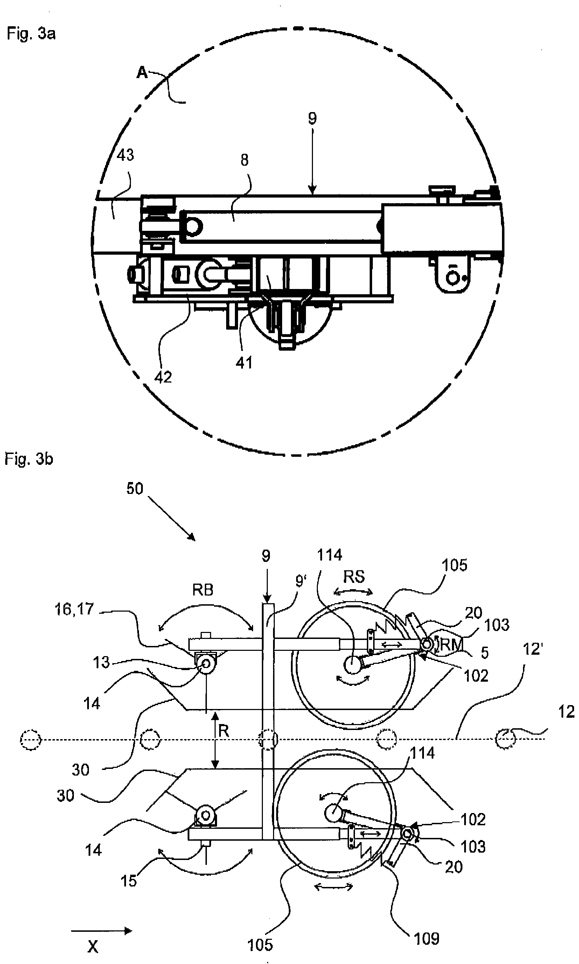

Mit der Schwenkvorrichtung 102 gekoppelt ist eine Vorrichtung zur Einstellung einer Vorspannung, über die sich einstellen lässt, wie stark das Schneidwerkzeug 100' bei Kontakt mit einer Rebe 12 ausweicht und die ein unkontrolliertes Wegschwenken des Schneidwerkzeugs 100' verhindert. Dazu ist ein Hebel 20 an der vertikalen Tragstange 103 angeordnet, insbesondere nicht drehbar festgeklemmt, und über eine Vorspannfeder 25 an einen Vorspannhalter 26 gekoppelt, der in **Fig. 2** an dem horizontalen Arm 3' angeordnet ist. Dabei kann durch Verändern der Position des Hebels 20 und des Vorspannhalters 26 diejenige Position des Mulchers 100 festgelegt werden, in der die Vorspannfeder 25, die bevorzugt eine Zugfeder ist, sich im entspannten Zustand befindet. Wird bei einem Rebkontakt der Mulcher 100 zum Ausweichen gezwungen, wird die Vorspannfeder 25 gespannt (gestreckt), sodass die Rückstellkraft der Vorspannfeder 25 den Mulcher 100 wieder näher an die Reben 12 drückt, ohne dass dafür eine manuelle Korrektur nötig wird. Je stärker die Vorspannung, einstellbar über die Anordnung der Vorspannfeder 25 an dem Vorspannhalter 26, desto schwergängiger weicht der Mulcher 100 den Reben 12 aus. Der Vorspannhalter 26 kann dazu horizontal unterschiedlich angeordnete Anklemmpunkte 26' oder -haken aufweisen. Damit das Anklemmen der Vorspannfeder 25 an den Anklemmpunkten 26' werkzeuglos erfolgen kann und so die Vorspannung leichter variierbar ist, kann ein Hilfsmittel, bspw. eine Kette an der Vorspannfeder 25 angeordnet sein, die dann einfach am Vorpannhalter am gewünschten Anklemmpunkt 26' eingehängt wird. In **Fig. 3** ist die Vorspannfeder 25 ausgehängt und somit nicht zu sehen.

Der Hebel 20 kann auch in anderer Ausrichtung als in Fig. 2 gezeigt ausgerichtet werden. Wird er beispielsweise um 180° rotiert, steht die Vorspannfeder 26 unter Spannung und wird bei Rebkontakt entspannt, sodass das Ausweichen besonders leichtgängig erfolgen kann.

Die Wegstrecke, um die der Mulcher 100 selbstständig ohne händisches Eingreifen und Korrektur des Fahrwegs oder der Position ausweichen kann, ist entlang der Vertikalen durch die Länge der Streben des Parallelogramms 102 vorgegeben. In horizontaler Richtung ist theoretisch eine Drehung um bis 360° um die als Welle fungierende vertikale Tragstange 103 möglich, wird aber durch eine Vorrichtung zur Einstellung einer Vorspannung (Hebel 20, Vorspannfeder 25 und Vorspannhalter 26) eingestellt. So genügen in Anlagen mit jungen Rebstöcken 12, die einen geringeren Stammdurchmesser aufweisen als ältere Reben 12, kleinere Schwenkwege des Mulchers 100.

In **Fig. 3** sind zwei der zuvor beschriebenen Vorrichtungen 1 als Teile einer überzeiligen Maschine 50 so angeordnet, dass sie beidseitig entlang einer Rebzeile 12', die durch in Reihe gepflanzte Reben 12 gebildet wird, geführt und zur Bearbeitung eingesetzt werden können. Über einen gemeinsamen Querbügel 9', der über die Rebzeile 12' hinweg ragt, sind die beiden Vorrichtungen 1 mit der Rahmenkonstruktion 9 der Maschine verbunden. **Fig. 3** und **Fig. 3b** unterscheiden sich darin, dass in **Fig. 3** ein Leitblech 108 an beiden Mulchern 100 vorliegt, das sich über den zum Bürstenwerkzeug 11 weisenden Teil des Umfangs der Drehscheibe 104 mit Dämpfungsring 105 erstreckt. **Fig. 3a** zeigt Details der Rahmenkonstruktion 9 in Draufsicht. In **Fig. 3b** hingegen hat jede Vorrichtung 1 einen Leitbügel 30, der in den übrigen Ansichten nicht gezeigt ist. Dieser kann ein- oder doppelstangig sein und erstreckt sich entlang des horizontalen Arms 3' auf derjenigen Seite der Vorrichtung 1, die der Rebzeile 12' zugewandt zu liegen kommt und damit in der überzeiligen Ausführungsform der Maschine 50 der jeweils anderen Vorrichtung 1 zugewandt ist. So wird die Fahrtrichtung X vorgegeben, da die Maschine 50 möglichst parallel zum Verlauf der Rebzeile 12' geführt werden muss. Die Distanz zwischen Leitbügel 30 und vertikalem Tragarm 2,2', die den Abstand zur Rebzeile 12' angibt, kann anpassbar sein.

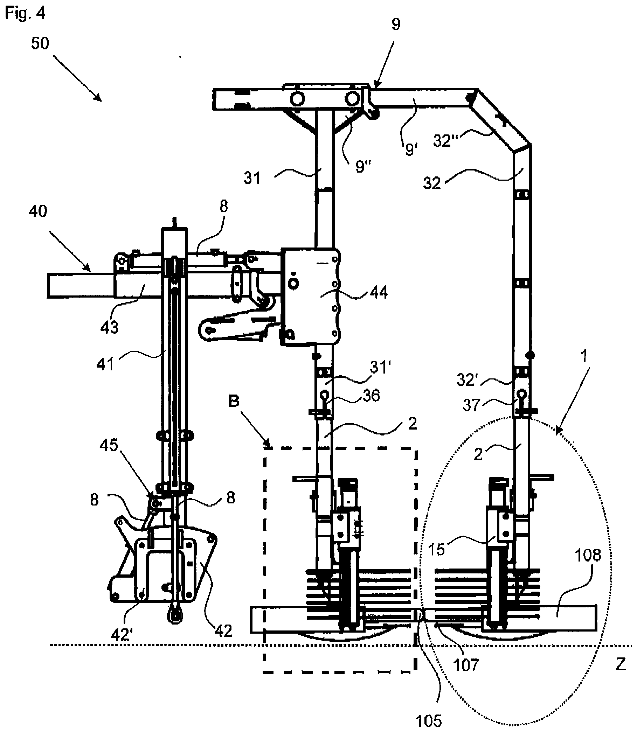

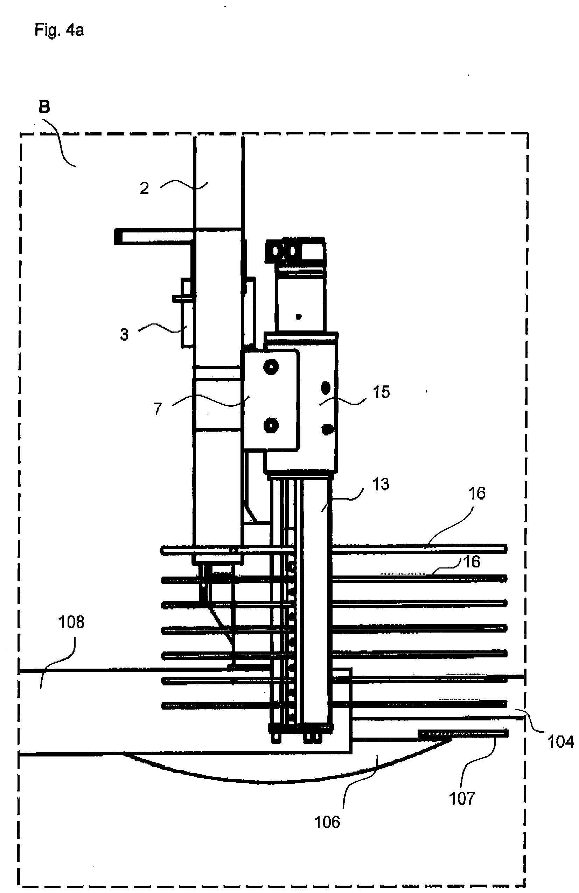

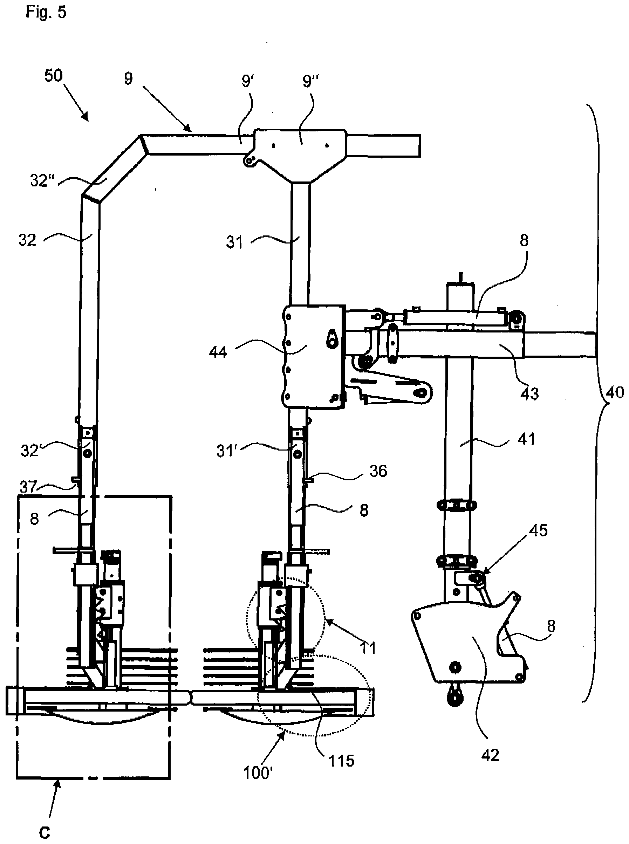

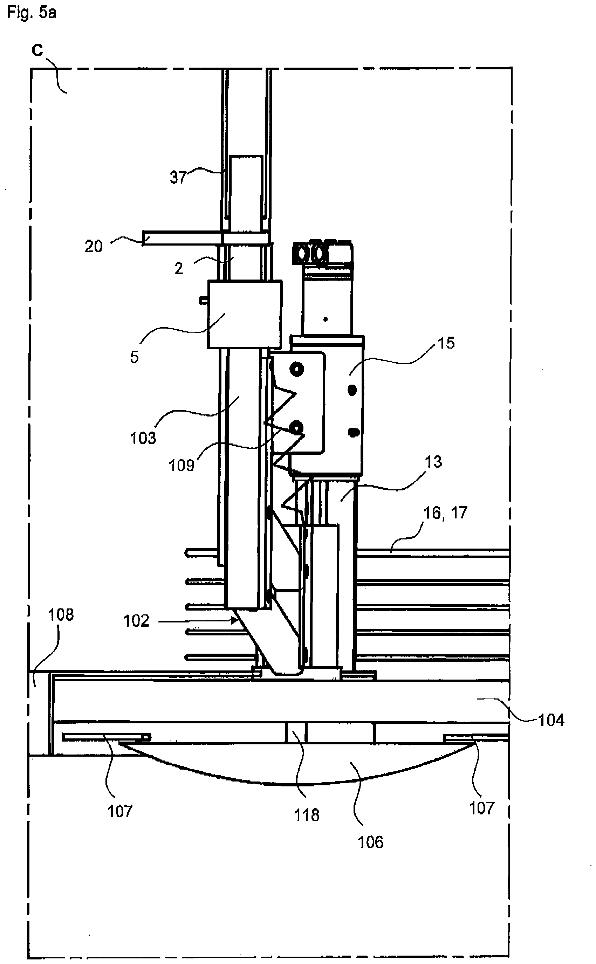

**Fig. 4** zeigt eine solche Maschine 50 mit zwei kombinierten Vorrichtungen 1 in Heckansicht (der Blick ist in die vorgesehene Fahrtrichtung gerichtet). So liegt das Bürstenwerkzeug 11, das hinter dem Mulcher 100 folgt, in der Bildebene vom, wie in der Detailansicht des Details B in **Fig. 4a** erkennbar ist. **Fig. 5** zeigt die entgegengesetzte Ansicht, die Anordnung der Werkzeuge zueinander geht aus Detail C in **Fig. 5a** hervor. Aus **Fig. 6** geht hervor, dass die Vorrichtungen 1 unabhängig voneinander angeordnet und betrieben werden können; der teleskopierbare horizontale Arm 3,3' ist auf der Seite mit dem zweiten Längsträger 32 länger, sodass das damit verbundene Schneidwerkzeug 100' leicht vor dem anderen Schneidwerkzeug 100' liegt. Der Gleitteller 106 und die Klingen 107 sind in dieser Ansicht von der Drehscheibe 104 mit Dämpfungsring 105 verdeckt.

Details der Rahmenkonstruktion 9 sind in **Fig. 4 bis 7** gezeigt: An dem Querbügel 9', der bevorzugt längenverstellbar ist, um die überzeilige Maschine 50 an die Breite einer zu bearbeitenden Zeile 12' anzupassen, ist für jede Vorrichtung 1 je ein Längsträger 31,32 angebracht, die auch längenverstellbar sein können, und die Höhe der jeweiligen gesamten Vorrichtung 1 festlegen. Der erste Längsträger 31 ist an seinem oberen Ende über ein Stabilisierungselement mit dem Querbügel 9' verbunden, der zweite Längsträger 32 ist über einen abgeschrägten Abschnitt 32" mit dem Querbügel 9' verbunden. Andere Verbindungsarten, auch Einstückigkeit von Querbügel 9' und Längsträger(n) 31, 32 sind denkbar. Die Höhenlage kann an sich bereits durch das Verbinden der Längsträger 31,32 mit dem jeweiligen vertikalen Tragarm 2,2' geschehen, etwa indem der Tragarm 2,2' als Innenrohr in den Längsträger 31,32 geschoben wird. Dazu weist jeder Längsträger 31,32 an seinem Ende 31',32' ein Eingriffselement 36,37 auf, mit dem der vertikale Tragarm 2,2' der jeweiligen Vorrichtung 1 in Eingriff steht. Die Verbindung ist lösbar gestaltet, sodass die jeweils zu verbindende Vorrichtung 1 ausgetauscht werden kann und zu Reinigungs-, Wartungszwecken etc. separat behandelt werden kann.

Die Maschine 50 weist ferner eine Haltevorrichtung 40 auf, die als Verbindungsmöglichkeit zu einem Trägerfahrzeug ausgebildet ist. In **Fig. 4 bis 7** ist die Maschine 50 in einem über die Haltevorrichtung 40 verbindbaren Zustand, ohne Trägerfahrzeug, zu sehen, wobei sich landwirtschaftliche Fahrzeuge wie bspw. Traktoren eignen, allgemein also Fahrzeuge, die für die Rebpflege bereits bekannt sind. Die Haltevorrichtung 40 ist mit der übrigen Rahmenkonstruktion 9 über eine Eingriffsvorrichtung 44 gekoppelt, die den ersten, d. h. näher zum Trägerfahrzeug zu liegen kommenden Längsträger 31 entlang eines Längenabschnitts umfasst. Ferner weist die Haltevorrichtung 40 einen Haltefuß 42 auf, der üblicherweise etwa auf Höhe des Fahrgestells des Trägerfahrzeugs zu liegen kommt und dazu ausgebildet ist, mit einem solchen Fahrzeug verbunden zu werden. Dazu liegt eine Befestigungsvorrichtung 42' **(****Fig. 4****)** vor, die bspw. über am Fahrzeug vorliegende korrespondierende Befestigungsmittel die Verbindung sicherstellt.

Ein Schwenkbügel 41 der Haltevorrichtung 40, ebenfalls längenverstellbar ausgeführt, ist schwenkbar an dem Haltefuß 42 befestigt, kann also von dort aus in eine von der Horizontalen abweichende Lage gebracht werden. Über einen Querträger 43, der die Eingriffsvorrichtung 44 aufweist, wird die Verbindung zur Rahmenkonstruktion 9 hergestellt. So kann die jeweilige Schwenkbewegung übertragen werden, indem die gesamte Rahmenkonstruktion 9 korrespondierend zur Lage des Schwenkbügels 41 geschwenkt wird, um eine Anpassung an die Neigung einer Rebzeile 12' vorzunehmen. Alternativ kann der an dem Querträger 43 vorliegenden Verschiebe-Mechanismus 80 aktiviert werden, sodass das Verschwenken ausgeglichen wird und stattdessen eine Änderung des Abstands zum Schwenkbügel und damit zum Trägerfahrzeug erfolgt (d. h. Verschieben parallel zum Boden nach rechts oder links). Für den Verschiebe-Mechanismus 80 wirken der Hydraulik-Zylinder 8 und ein Kipp-Hydraulik-Zylinder 81 derart zusammen, dass bei Aktivierung/Deaktivierung die Rahmenkonstruktion 9 um einen Winkel verkippt wird. Wird der Hydraulik-Zylinder 8 stärker ausgefahren, wird die Rahmenkonstruktion 9 nach links (in **Fig. 6****)** verkippt, wird der Kipp-Hydraulik-Zylinder 81 stärker ausgefahren, wird die Rahmenkonstruktion 9 nach rechts (in Fig. 6) verkippt. Dazu ist der Querträger 43 in der Eingriffsvorrichtung 44 kippbar aufgenommen.

**Fig. 3a** zeigt als Detail A eine Draufsicht auf den Querträger 43 und den Schwenkbügel 41, der im Haltefuß 42 mündet. Der Hydraulik-Zylinder 8 bildet einen Teil des Verschiebe-Mechanismus 80.

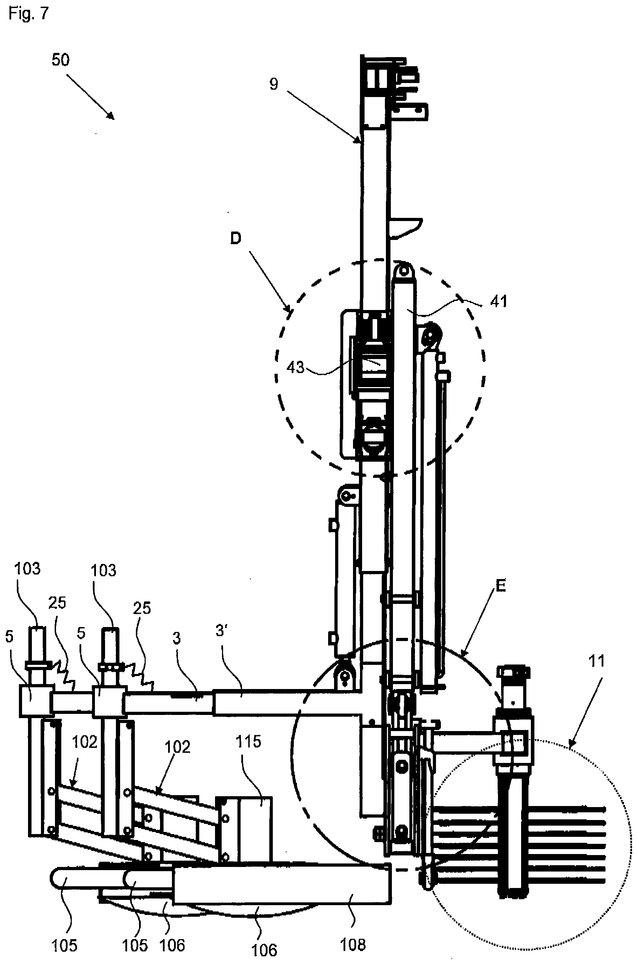

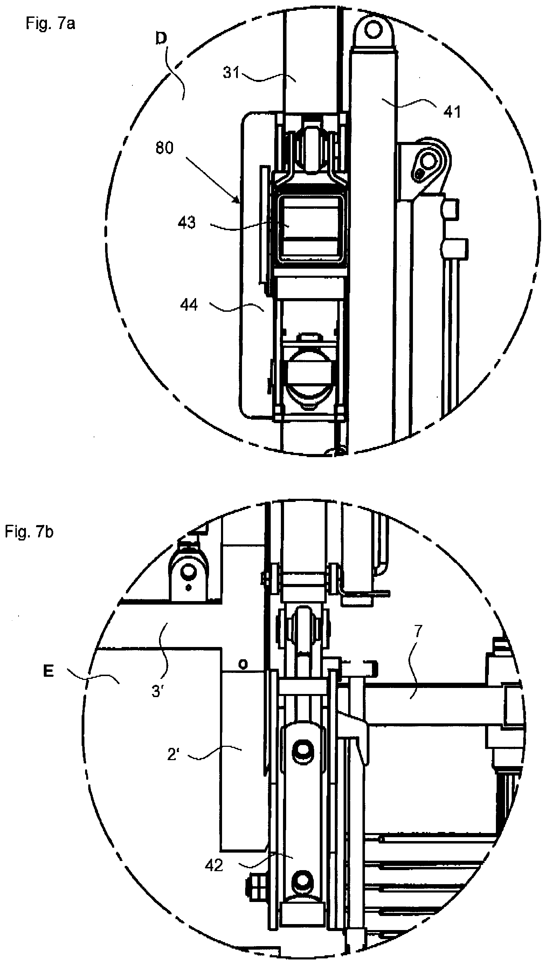

Detail D in Fig. 7a zeigt eine Seitenansicht auf den Verschiebe-Mechanismus 80, mittels dem die Rahmenkonstruktion 9 horizontal verschoben wird. Haltevorrichtung 44 des Verschiebe-Mechanismus 80 hält den Längsträger 31 und ist operativ mit dem Hydraulik-Zylinder 8 verbunden.

Detail E in **Fig. 7b** zeigt, ebenfalls in Seitenansicht, den Haltefuß 42, über den die Maschine 50 an ein Fahrzeug koppelbar ist.

Vorteilhaft ergeben sich aufgrund der Positionierbarkeit der einzelnen Komponenten zueinander durch längen- und höhenverstellbare Arme 2',3', Bügel 9', 41 und Träger 31, 32, 43 verbesserte Arbeitsbedingungen. Beispielhaft sei genannt, dass die beiden Mulcher 100 der Vorrichtungen 1 durch die jeweiligen teleskopierbaren horizontalen Arme 3' und den Querbügel 9' so angeordnet werden können, dass sie in Fahrt- bzw. Arbeitsrichtung X betrachtet zueinander versetzt leicht hintereinander geführt werden. Der in **Fig. 3b** angedeutete Bereich R direkt um die Reben herum wird bei Mulchern nach Stand der Technik nur unzureichend beschnitten. Durch die versetzte Anordnung der Mulcher 100 gemäß der Erfindung wird dieser Bereich R nun voll der Bearbeitung zugänglich, ohne dass die Gefahr der Beschädigung der Reben 12 besteht, da die Mulcher 100 zunächst nur mit dem Puffer 105 die Rebe 12 kontaktieren und dann leicht ausweichen können. Außerdem werden bei der überzeiligen, ein- oder zweiseitigen Bearbeitung der Zeile 12' auch Pflanzenteile erfasst, die sich bei nur einseitiger Bearbeitung aus dem jeweiligen Werkzeug 11, 100' herausbiegen können.

Alternativ zu den gezeigten überzeiligen Maschinen 50 kann die Maschine selbstverständlich auch nur halbzeilig gestaltet sein. Dann genügt ein mit dem ersten Längsträger 31 vergleichbarer Träger, an den die Vorrichtung dann weiter unten, näher am Boden gekoppelt wird. Zur vollständigen Bearbeitung der Rebzeilen 12' muss der Fahrweg zwischen den Zeilen 12' jeweils doppelt durchfahren werden, was abhängig von den örtlichen Gegebenheiten dennoch das gewünschte bzw. notwendige Vorgehen sein kann, bspw. in sehr kleinen Anlagen mit schmalen Fahrgassen, wo auch ein entsprechend kleines Trägerfahrzeug genutzt wird. Wenn überzeilige Arbeitsweise nicht gewollt oder nicht möglich ist, kann auch eine jeweils halbzeilig, aber beidseitig des Trägerfahrzeugs arbeitende Maschine realisiert werden - mit dieser sind zwar zur vollständigen Bearbeitung einer Zeile 12' zwei Durchfahrten nötig, dennoch muss jede Gasse nur einmal durchfahren werden.

Gleichfalls gilt für die an die Maschine gekoppelte Vorrichtung, dass es sich nicht um eine kombinierte Vorrichtung 1 handeln muss, sondern auch die Vorrichtung allein mit Mulcher 100 Teil einer halb- oder überzeiligen oder zweiseitigen Maschine 50 sein kann.

Durch die Gesamtkonstruktion der Maschine mit Haltevorrichtung 40 ergibt sich eine nahezu beliebige Anpassbarkeit an die vorliegenden Bedingungen der zu pflegenden Anlage. So kann auch eine Rebzeile 12', die entlang einer geneigten Böschung verläuft, überzeilig bearbeitet werden, weil die Vorrichtungen 1, die an den beiden Seiten der Rebzeile 12' betrieben werden, unabhängig voneinander angehoben bzw. abgesenkt werden können.

Allgemein können die verschiedenen Einstellungen entweder manuell oder automatisch erfolgen. Es ist vorteilhaft, wenn zumindest ein Teil der Einstellungen automatisiert von der Fahrerkabine des Trägerfahrzeugs aus getroffen werden können, insbesondere das einseitige oder beidseitige Anheben, damit keine Blockade den Arbeitsvorgang unterbricht. Dazu können bevorzugt hydraulische Antriebe, ggf. aber auch elektrische, zum Einsatz kommen, die entsprechend angesteuert werden können. Dem Fachmann ist bekannt, wie solche Antriebe auszuführen sind, und dass die nötigen Leitungen und Anschlüsse so anzuordnen sind, dass sie nicht in den Arbeitsbereich der Vorrichtung ragen.

Bei anderen Funktionen wie dem relativen Positionieren von Mulcher 100 und Bürstenwerkzeug 11 zueinander kann eine manuelle Einstellbarkeit ausreichen, da diese von der Art der Kulturpflanzenzeile und der gewünschten Art der Bearbeitung abhängen und somit bereits vor Pflegebeginn festgelegt werden.

Abweichend von der vorgesehenen Anordnung an der Front des Trägerfahrzeugs ist eine Anordnung am Heck selbstverständlich ebenso gut möglich. Auch ist es möglich, mehrere Maschinen 50 an ein Trägerfahrzeug zu koppeln und damit sogar zwei komplette Rebzeiien 12' mit einer Durchfahrt zu pflegen.

### BEZUGSZEICHENLISTE

- 1: Kombinierte Vorrichtung zur Rebpflege
- 50: überzeilige Maschine zum Betreiben der Vorrichtung
- 100: Mulcher
- 100': Schneidwerkzeug
- 2: vertikaler Tragarm
- 2': höhenverstellbarer vertikaler Tragarm
- 3: horizontaler Arm
- 3': teleskopierbarer horizontaler Arm
- 5: Lager
- 7: Tragwinkel
- 80: Verschiebe-Mechanismus
- 81: Kipp-Hydraulik-Zylinder
- 8: Hydraulik-Zylinder
- 9: Rahmenkonstruktion
- 9': Querbügel
- 9": Stabilisierungselement
- 11: Bürstenwerkzeug
- 12: Reihenkulturpflanzenstamm
- 12': Reihenkulturpflanzenzeile
- 13: Rotationsachse Bürstenwerkzeug
- 14: Antrieb Bürstenwerkzeug
- 15: Gehäuse Antrieb Bürstenwerkzeug
- 16: Rundschnur
- 17: Lappen
- 20: Hebel
- 25: Vorspannfeder
- 26: Vorspannhalter
- 26': Anklemmpunkt
- 30: Leitbügel
- 31: erster Längsträger
- 31': Ende erster Längsträger
- 32: zweiter Längsträger
- 32': Ende zweiter Längsträger
- 32": abgeschrägter Abschnitt
- 36: Eingriffselement erster Längsträger
- 37: Eingriffselement zweiter Längsträger
- 40: Halterung
- 41: höhenverstellbarer Schwenkbügel
- 42: Haltefuß
- 42': Befestigungsvorrichtung
- 43: Querträger
- 44: Eingriffsvorrichtung
- 45: Schwenkmechanismus
- 102: Schwenkvorrichtung, Parallelogramm
- 103: vertikale Tragstange
- 104: Drehscheibe
- 105: Puffer, Dämpfungsring
- 106: Gleitteller
- 107: Klinge
- 108: Leitblech
- 109: Federvorrichtung
- 110: Zusatzhalterung Parallelogramm
- 113: Rotationsachse Schneidwerkzeug
- 114: Antrieb Rotationsvorrichtung Schneidwerkzeug
- 115: Gehäuse Antrieb Schneidwerkzeug
- 116: Anschlussstutzen Schneidwerkzeug
- 118: Kopplungselement
- RS: Rotationsrichtung Schneidwerkzeug
- RB: Rotationsrichtung Bürstenwerkzeug
- RM: horizontale Ausweichbewegung Mulcher
- X: Fahrtrichtung Trägerfahrzeug
- R: Bereich um die Rebzeile
- Z: Erdboden

## Patentansprüche

1. Vorrichtung zur Pflege von Reb- und Zeilenkulturpflanzenanlagen, die einen Mulcher (100) mit einem Schneidwerkzeug (100') umfasst, wobei das Schneidwerkzeug (100') eine mittels einem auf einer vertikalen Rotationsachse (113) angeordneten Antrieb (114) mit Gehäuse (115) antreibbare Rotationsvorrichtung aufweist, die eine Mehrzahl Klingen (107) trägt, die sich radial von der Rotationsachse (113) weg erstrecken, und wobei das Schneidwerkzeug (100') über das Gehäuse (115) mit einer vertikalen Tragstange (103) über eine Schwenkvorrichtung (102), die zumindest einen Dämpfer (109) umfasst, vertikal beweglich verbunden ist, **wobei** die Vorrichtung auch ein Bürstenwerkzeug (11) aufweist, das einen auf einer vertikalen Rotationsachse (13) angeordneten Antrieb (14) mit Gehäuse (15) aufweist, wobei in einem von dem Antrieb (14) wegweisenden Abschnitt der vertikalen Rotationsachse (13) eine Vielzahl Rundschnüre (16), Faden, Riemen oder Lappen (17) angeordnet ist, wobei diese Rundschnüre (16), Faden, Riemen oder Lappen (17) entlang der Länge der Rotationsachse und/oder entlang deren Umfang angeordnet sind, **dadurch gekennzeichnet, dass** die vertikale Tragstange (103) des Mulchers (100) längenverstellbar und an einem horizontalen Arm (3,3') befestigt ist, der höhenverstellbar an einem vertikalen Tragarm (2) angeordnet ist, dass an dem Tragarm (2,2') auch das Bürstenwerkzeug (11) über einen Tragwinkel (7), der mit dem Gehäuse (15) des Bürstenwerkzeugs (11) verbunden ist, angeordnet ist, wodurch der Mulcher (100) und das Bürstenwerkzeug (11) eine kombinierte Vorrichtung (1) bilden, und dass das Bürstenwerkzeug (11) dem Mulcher (100) der kombinierten Vorrichtung (1) derart nachgelagert ist, dass zunächst der um die Rebstöcke herum vorliegende Bodenbewuchs von Gräsern und sonstigen Kleinpflanzen durch den Mulcher (100) beschnitten wird, ehe im gleichen Arbeitsgang mit dem Bürstenwerkzeug (11) die Austriebe der Reben im Unterstammbereich abgeschnitten beziehungsweise abgeschlagen werden.

2. Vorrichtung nach Anspruch 1,
**dadurch gekennzeichnet, dass**
die vertikale Tragstange (103) in einem Lager (5) drehbar gelagert ist.

3. Vorrichtung nach Anspruch 1 oder 2,
**dadurch gekennzeichnet, dass**
die antreibbare Rotationsvorrichtung einen Gleitteller (106) aufweist, der mit dem Antrieb (114) über die Rotationsachse (113) gekoppelt ist und an dem die Klingen (107) derart befestigt sind, dass sie sich zum Schneiden über einen Umfangsrand des Gleittellers (106) hinaus erstrecken
und eine Drehscheibe (104) aufweist, die über ein rotationsaxial angeordnetes Kopplungselement (118) mit dem Gleitteller (106) gekoppelt und bevorzugt um die Rotationsachse (113) drehbar gelagert ist, und an der umfänglich zumindest ein Puffer (105) angeordnet ist, wobei der Puffer (105) bevorzugt ein in einer Umfangsnut eingelegter Dämpfungsring (105) oder ein umfänglich angeordneter Wulst, bevorzugt aus einem Elastomer, ist, wobei die Drehscheibe (104) mit Puffer (105) einem Umfang aufweist, der größer ist als ein Kreisumfang, der den Gleitteller (106) mit Klingen (107) umschreibt.

4. Vorrichtung nach zumindest einem der Ansprüche 1 bis 3,
**dadurch gekennzeichnet, dass**
der Dämpfer (109) der Schwenkvorrichtung (102) eine Federvorrichtung, bevorzugt eine Zug-Schraubenfeder (109) ist, oder eine Gaszugfeder;
wobei die Schwenkvorrichtung (102) bevorzugt mit einer Vorrichtung zur Einstellung einer Vorspannung gekoppelt ist, und/oder dass die Schwenkvorrichtung (102) zumindest ein, bevorzugt zwei, aus einem Paar aus übereinander angeordneten Streben gebildetes Parallelogramm aufweist/aufweisen, deren jeweils eines Strebenende gelenkig direkt oder über eine Zusatzhalterung (110) an der vertikalen Tragstange (103) und deren jeweils anderes Strebenende gelenkig direkt oder über eine Zusatzhalterung (110) an dem Gehäuse (115) an dem Antrieb (114) angeordnet sind.

5. Vorrichtung nach zumindest einem der Ansprüche 1 bis 4,
**dadurch gekennzeichnet, dass**
das Gehäuse (115) und/oder das Gehäuse (15) zumindest einen Anschlussstutzen (116) aufweist/aufweisen, der mit einer elektrischen und/oder hydraulischen Leitung verbindbar ist.

6. Vorrichtung nach zumindest einem der Ansprüche 1 bis 5,
**dadurch gekennzeichnet, dass**
die vertikale Tragstange (103) des Mulchers (100) teleskopierbar längenverstellbar und an einem bevorzugt teleskopierbar längenverstellbaren horizontalen Arm (3, 3') befestigt, ist, der seinerseits bevorzugt an einem teleskopierbar längenverstellbaren Tragarm (2,2') angeordnet ist.

7. Vorrichtung nach zumindest einem der Ansprüche 1 bis 6,
**dadurch gekennzeichnet, dass**
oberhalb der Rotationsachsen (13,113) eine Schutzhaube angeordnet ist.

## Claims

1. Device for the care of vine plant and row crop installations, comprising a mulcher (100) with a cutting tool (100'),
wherein the cutting tool (100') has a rotating device which can be driven by means of a drive (114) with housing (115) arranged on a vertical axis of rotation (113) and which carries a plurality of blades (107) extending radially away from the axis of rotation (113),
and wherein the cutting tool (100') is connected in a vertically movable manner via the housing (115) to a vertical support rod (103) via a pivoting device (102), which comprises at least one damper (109), **wherein** the device also has a brushing tool (11) which has a drive (14) with housing (15) arranged on a vertical axis of rotation (13), wherein a plurality of round cords (16), threads, belts or lobes (17) are arranged in a section of the vertical axis of rotation (13) pointing away from the drive (14), wherein these round cords (16), threads, belts or lobes (17) are arranged along the length of the axis of rotation and/or along its circumference, **characterized in that** the vertical support rod (103) of the mulcher (100) is adjustable in length and is attached to a horizontal arm (3, 3') which is arranged on a vertical support arm (2) so as to be adjustable in height, **in that** the brushing tool (11) is also arranged on the support arm (2, 2') via a support bracket (7) which is connected to the housing (15) of the brushing tool (11), whereby the mulcher (100) and the brushing tool (11) form a combined device (1), and **in that** the brushing tool (11) is arranged downstream of the mulcher (100) of the combined device (1) in such a way that first the ground growth of grasses and other small plants present around the vines is trimmed by the mulcher (100) before the shoots of the vines in the lower trunk region are cut off or knocked off by the brushing tool (11) in the same operation.

2. Device according to claim 1, **characterized in that** the vertical support rod (103) is rotatably mounted in a bearing (5).

3. Device according to claim 1 or 2, **characterized in that**
the drivable rotating device has a sliding plate (106) which is coupled to the drive (114) via the axis of rotation (113) and to which the blades (107) are fastened in such a way that they extend beyond a circumferential edge of the sliding plate (106) for cutting
and has a rotating disk (104) which is coupled to the sliding plate (106) via a coupling element (118) arranged axially with respect to rotation and is preferably mounted rotatably about the axis of rotation (113), and on which at least one buffer (105) is arranged circumferentially,
wherein the buffer (105) is preferably a damping ring (105) inserted in a circumferential groove or a circumferentially arranged bead, preferably made of an elastomer,
wherein the rotating disk (104) with buffer (105) has a circumference which is greater than a circular circumference which circumscribes the sliding disk (106) with blades (107).

4. Device according to at least one of claims 1 to 3,
**characterized in that**
the damper (109) of the pivoting device (102) is a spring device, preferably a tension coil spring (109), or a gas tension spring;
wherein the pivoting device (102) is preferably coupled to a device for adjusting a pretension, and/or **in that** the pivoting device (102) comprises at least one, preferably two, parallelograms formed from a pair of struts arranged one above the other, one end of each strut being articulated directly or via an additional mounting (110) to the vertical support rod (103) and the other end of each strut being articulated directly or via an additional mounting (110) to the housing (115) on the drive (114).

5. Device according to at least one of claims 1 to 4,
**characterized in that**
the housing (115) and/or the housing (15) has/have at least one connecting piece (116) which can be connected to an electrical and/or hydraulic line.

6. Device according to at least one of claims 1 to 5,
**characterized in that**
the vertical support rod (103) of the mulcher (100) is telescopically length-adjustable and is attached to a preferably telescopically length-adjustable horizontal arm (3, 3'), which in turn is preferably arranged on a telescopically length-adjustable support arm (2, 2').

7. Device according to at least one of claims 1 to 6,
**characterized in that**
a protective hood is arranged above the axes of rotation (13, 113).

## Revendications

1. Dispositif pour l'entretien des plantes cultivées en rangées et des vignes, qui comprend un broyeur (100) avec un outil de coupe (100'), l'outil de coupe (100') présentant un dispositif de rotation pouvant être entraîné au moyen d'un entraînement (114) disposé sur un axe de rotation vertical (113) avec un boîtier (115), qui porte une pluralité de lames (107) qui s'étendent radialement en s'éloignant de l'axe de rotation (113), et dans lequel l'outil de coupe (100') est relié de manière mobile verticalement, par l'intermédiaire du boîtier (115), à une barre de support verticale (103) par l'intermédiaire d'un dispositif de pivotement (102) qui comprend au moins un amortisseur (109), le dispositif comprenant également un outil de brossage (11) qui comprend un entraînement (14) avec un boîtier (15) disposé sur un axe de rotation vertical (13), une pluralité de cordons ronds (16), de fils, de courroies ou de lobes (17) étant disposés dans une partie de l'axe de rotation vertical (13) qui s'éloigne de l'entraînement (14), lesdits cordons ronds (16), fils, courroies ou pattes (17) étant disposés le long de la longueur de l'axe de rotation et/ou le long de sa circonférence, **caractérisé en ce que** la barre de support verticale (103) du broyeur (100) est réglable en longueur et est fixée à un bras horizontal (3, 3') qui est disposé de manière réglable en hauteur sur un bras de support vertical (2), **en ce que** sur le bras de support (2,2') est également disposé l'outil de brossage (11) par l'intermédiaire d'une équerre de support (7) qui est reliée au boîtier (15) de l'outil de brossage (11), ce qui fait que le broyeur (100) et l'outil de brossage (11) forment un dispositif combiné (1), et **en ce que** l'outil de brossage (11) est disposé en aval du broyeur (100) du dispositif combiné (1) de telle sorte que la végétation au sol présente autour des ceps de vigne, constituée d'herbes et d'autres petites plantes, est d'abord coupée par le broyeur (100)
avant que, au cours de la même opération, les pousses de la vigne soient coupées ou abattues dans la zone du tronc inférieur avec l'outil de brossage (11).

2. Dispositif selon la revendication 1,
**caractérisé en ce que**
la barre de support verticale (103) est logée de manière rotative dans un palier (5).

3. Dispositif selon la revendication 1 ou 2,
**caractérisé en ce que**
le dispositif rotatif pouvant être entraîné présente un plateau coulissant (106) qui est couplé à l'entraînement (114) par l'intermédiaire de l'axe de rotation (113) et sur lequel les lames (107) sont fixées de telle sorte qu'elles s'étendent au-delà d'un bord périphérique du plateau coulissant (106) pour la coupe et présente un disque rotatif (104) qui est couplé au plateau coulissant (106) par l'intermédiaire d'un élément de couplage (118) disposé dans l'axe de rotation et est logé de préférence de manière à pouvoir tourner autour de l'axe de rotation (113), et sur lequel est disposé en périphérie au moins un tampon (105), le tampon (105) étant de préférence une bague d'amortissement (105) insérée dans une rainure périphérique ou un bourrelet disposé en périphérie, de préférence en élastomère, le disque rotatif (104) avec tampon (105) présentant une périphérie qui est plus grande qu'une périphérie circulaire qui entoure le plateau coulissant (106) avec des lames (107).

4. Dispositif selon au moins l'une des revendications 1 à 3,
**caractérisé en ce que**
l'amortisseur (109) du dispositif de pivotement (102) est un dispositif à ressort, de préférence un ressort hélicoïdal de traction (109) ou un ressort de traction à gaz ;
le dispositif de pivotement (102) étant de préférence couplé à un dispositif de réglage d'une précontrainte, et/ou **en ce que** le dispositif de pivotement (102) présente au moins un, de préférence deux, parallélogramme(s) formé(s) d'une paire d'entretoises disposées l'une au-dessus de l'autre, dont respectivement une extrémité d'entretoise est disposée de manière articulée directement ou par l'intermédiaire d'une fixation supplémentaire (110) sur la barre de support verticale (103) et dont respectivement l'autre extrémité d'entretoise est disposée de manière articulée directement ou par l'intermédiaire d'une fixation supplémentaire (110) sur le boîtier (115) sur l'entraînement (114).

5. Dispositif selon au moins l'une des revendications 1 à 4,
**caractérisé en ce que**
le boîtier (115) et/ou le boîtier (15) présente(nt) au moins une tubulure de raccordement (116) qui peut être reliée à une conduite électrique et/ou hydraulique.

6. Dispositif selon au moins l'une des revendications 1 à 5,
**caractérisé en ce que**
la barre de support verticale (103) du broyeur (100) est réglable en longueur de manière télescopique et est fixée à un bras horizontal (3, 3') de préférence réglable en longueur de manière télescopique, qui est lui-même disposé de préférence sur un bras de support (2, 2') réglable en longueur de manière télescopique.

7. Dispositif selon au moins l'une des revendications 1 à 6,
**caractérisé en ce que**
un capot de protection est disposé au-dessus des axes de rotation (13, 113).
